# EUROPÄISCHE PATENTANMELDUNG

(11) **EP 0 586 967 A1**
(43) Veröffentlichungstag der Anmeldung: **16.03.1994**
(21) Anmeldenummer: 93113589.1
(22) Anmeldetag: 25.08.1993
(51) Int. Cl.: F16K 17/196, F16K 15/14

(54) **Nachsaugesperrventil**

(30) Priorität: 07.09.1992 DE 4229841
(71) Anmelder: WEBER-HYDRAULIK GmbH, D-74361 Güglingen (DE)
(72) Erfinder: Obermeyer, Günter, D-74363 Güglingen (DE)
(74) Vertreter: Säger, Manfred, Dipl.-Ing.

(57) **Zusammenfassung**

Nachsaugesperrventil, das einen in einem Gehäuse (30) verschiebbaren Schieber (16) aufweist, der mit einem Umfangsbereich seiner Umfangsflächen an dichtenden Führungsflächen (18) des Gehäuses (30) geführt ist, die einen Teil der Umfangsfläche (20) des Schiebers (16), unter Bildung zweier voneinander getrennter und von den Gehäuse (30) und dem Schieber (16) begrenzte Kammern (22,24) abdichten, sind zwei Kanäle (26,28) im Schieber (16) vorgesehen, deren freie Enden (32,34) in unterschiedlichen Kammern (22,24) münden, und deren andere Enden (36,38) in dem Umfangsbereich des Schiebers (16) münden, und der Schieber (16) liegt mit seinen anderen Enden (36,38) in der neutralen Schließstellung (Z) mit seinem Umfangsbereich im Bereich der dichtenden Führungsflächen (18) und in von der neutralen Schließstellung in Bereiche außerhalb der dichtenden Führungsfläche (18) verschobenen Stellung im Bereich einer der beiden Kammern (22,24).

## Beschreibung

Die vorliegende Erfindung betrifft ein Nachsaugesperrventil für hydraulische Kippvorrichtungen, das insbesondere bei Kippvorrichtungen von Fahrerhäusern für Lastkraftwagen zum Einsatz kommt, gemäß dem Oberbegriff des Hauptanspruches.

Eine solches Nachsaugesperrventil für hydraulische Kippvorrichtungen für Fahrerhäuser von Lastkraftwagen ist bekannt (DE-29 45 585 C2). Als Nachsaugesperrventil werden darin Rückschlagventile verwendet, die aus Kugelventilen bestehen. Kugelventile haben jedoch den Nachteil, das sie schon bei geringster Verschmutzung des Kugelsitzes nicht mehr einwandfrei arbeiten.

Aufgabe der vorliegenden Erfindung ist es, Nachsaugesperrventile bereitzustellen, die störunanfälliger sind.

Gelöst wird diese Aufgabe bei einem Nachsaugesperrventil gemäß dem Oberbegriff des Hauptanspruches durch dessen kennzeichnende Merkmale. Die Unteransprüche geben bevorzugte Ausgestaltungen der Erfindung wieder.

Erfindungsgemäß werden die in zwei entgegengesetzten Richtungen antiparallel geschalteten Rückschlagventile, die eine in beiden Richtungen sperrende neutrale Schließstellung aufweisen, ersetzt durch ein Schieberventil oder ein Membranventil.

Die Ausführungsform als Schieberventil weist einen Schieber auf, der in einem Gehäuse verschiebbar ist. Das Gehäuse weist am inneren Umfang dichtende Führungsflächen auf, die den Schieber führen, indem sie an einem Umfangsbereich seiner Umfangsfläche angreifen. Durch die Führung des Schiebers innerhalb der Führungsflächen des Gehäuses entstehen im Gehäuse beidseitig des Schiebers zwei voneinander getrennte Kammern, die vom Gehäuse und dem Schieber begrenzt werden. Der Schieber weist zwei Kanäle auf, die auch in Form von Mehrfachkanälen ausgestaltet sein können. Dabei münden jeweils die freien Enden jedes Kanals in einer der beiden unterschiedlichen Kammern, während die anderen Enden in der neutralen Schließstellung des Schiebers im Bereich der dichtenden Führungsflächen enden, also etwa in der Schiebermitte. Auf diese Weise werden in der neutralen Schließstellung diese beiden Enden der Kanäle durch die dichtenden Führungsflächen des Gehäuses abgedichtet. Der Schieber läßt sich seitlich soweit verschieben, daß die Mündungsstellen dieser anderen Enden der Kanäle außerhalb des Bereichs der dichtenden Führungsflächen liegen, und sich damit in den Bereich einer der beiden Kammern öffnen. Dadurch wird entsprechend der Schieberstellung ein Durchgang vom freien Ende eines Kanals, der in eine der beiden Kammern endet, in das andere Ende des Kanals möglich, der in der zweiten Kammer mündet. Der zweite Kanal ist in dieser Stellung kurzgeschlossen.

Der Schieber wird vorzugsweise in beiden Bewegungsrichtungen durch Federn beaufschlagt, wobei bevorzugt eine der beiden Federn, die den Schieber in der Pumprichtung gegen den Pumpendruck beim Anheben des Fahrerhauses beaufschlagt, einen stärkeren Federdruck ausübt als die Feder der Gegenrichtung.

In einer weiteren Ausführungsform kann der Ventilmechanismus elastische, in Durchflußrichtung elastisch sich öffnende Membranen enthalten, die entweder aus zwei axial mittig sich berührenden Einzelmembranen bestehen, die sich elastisch zu einem zentralen Durchflußkanal öffnen, oder es kann eine in axialer Richtung zentrale Membran enthalten, die in radialer Richtung Dichtzungen aufweisen, die jeweils in entgegengesetzten Fließrichtungen öffnen bzw. sperren.

Die vorliegende Erfindung ermöglicht den Austausch der bisher verwendeten störanfälligen Kugelventile durch Schieberventile bzw. Membranventil. Dadurch werden Schmutzprobleme, die bei Kugelrückschlagventilen häufig sind, vermieden.

Die Erfindung wird nachfolgend anhand der Figuren beispielhaft näher beschrieben. Hierin zeigt:
- Figur 1: einen Schnitt durch ein Nachsaugesperrventil mit Schieber und
- Figur 2: verschiedene Ausführungsformen von Nachsaugesperrventilen mit Membranen.

Der Ventilmechanismus 10 enthält ein Schieberventil 12 mit einem Gehäuse 30, das als Schraubgehäuse mit einem Außengewinde 46 ausgestaltet ist. Das Gehäuse enthält zwei Anschlußöffnungen 48 sowie eine linke Kammer 22 und eine rechte Kamemr 24, zwischen denen ein Schieber 16 mit dichtenden Führungsflächen 18 des Gehäuse 30 geführt wird.

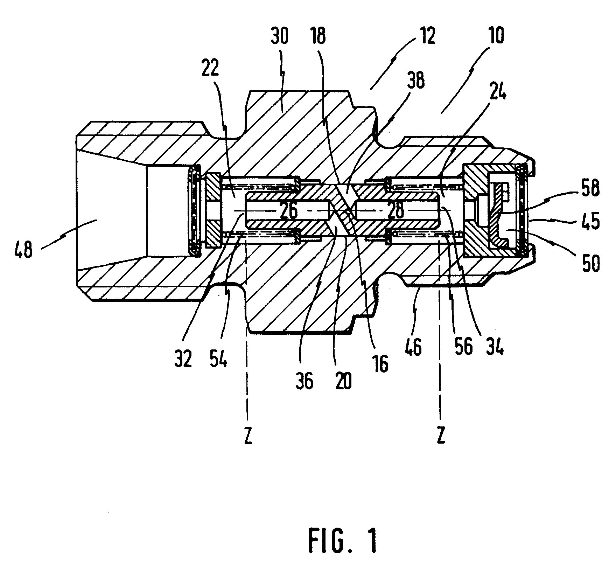

Die dichtenden Führungsflächen 18 greifen an Umfangsflächen 20 des Schiebers an. Der zwischen den beiden Kammern 22, 24 im Gehäuse 30 von den dichtenden Führungsflächen 18 geführte Schieber 16 weist zwei Kanäle 26, 28 auf, die sich mit ihren freien Enden 32, 34 in die Kammern 22, 24 öffnen. Die anderen Enden 36, 38 der Kanäle sind in der neutralen Schließstellung, wie sie in Fig. 1 gezeigt ist, durch die dichtenden Führungsflächen 18 des Gehäuses 30 abgedichtet.

Wird der Schieber 16 beispielsweise aus der neutralen Schließstellung Z soweit nach rechts verschoben, daß sich das Ende 36 des Kanals 26 zur Kammer 24 hin öffnet, so ist ein Durchgang von der Kammer 22 zur Kammer 24 durch den Kanal 26 möglich. In dieser Stellung ist der Kanal 28 kurzgeschlossen.

In entsprechender Weise wird beim Verschieben des Schiebers 16 nach links ein Durchgang von der Kammer 24 in die Kammer 22 über den Kanal 28 möglich.

Der Schieber 16 wird durch Federn 54, 56 in entgegengesetzten Richtungen beaufschlagt. Dabei ist die Federkraft der Federn 56 stärker als die Federkraft der Federn 54, wodurch bewirkt wird, daß beim Durchfluß eines Pumpfluids in Richtung von der Kammer 22 zur Kammer 24, d.h. in der Anheberichtung der Fahrerkabine, das Schieberventil erst öffnet, wenn der volle Pumpendruck in der linken Anschlußöffnung 48 und damit der Kammer 22 ansteht. Die Federbeaufschlagung in der Gegenrichtung durch die Feder 54 ist hingegen geringer, so daß in dieser Richtung bereits ein geringerer Druck auf den Schieber 16 zum Öffnen des Schieberventils 12 nach links führt. Auf diese Weise wird beim Schwingen des Fahrerhauses im Fahrbetrieb ein Abführen des Pumpfluids ermöglicht, ein Nachsaugen hingegen gesperrt.

Der Ventilmechanismus 10 weist zusätzlich eine Drossel 50 auf, die beim Anheben des Fahrerhauses, also beim Durchfluß des Pumpfluids von Kammer 26 in Richtung zur Kammer 28, das Plattenventil 54 voll anhebt und damit öffnet, während es beim Absenken des Fahrerhauses, also beim Fluß in Richtung von der Kammer 28 zur Kammer 26, nur eine schmale, als Drossel wirkende Öffnung freigibt.

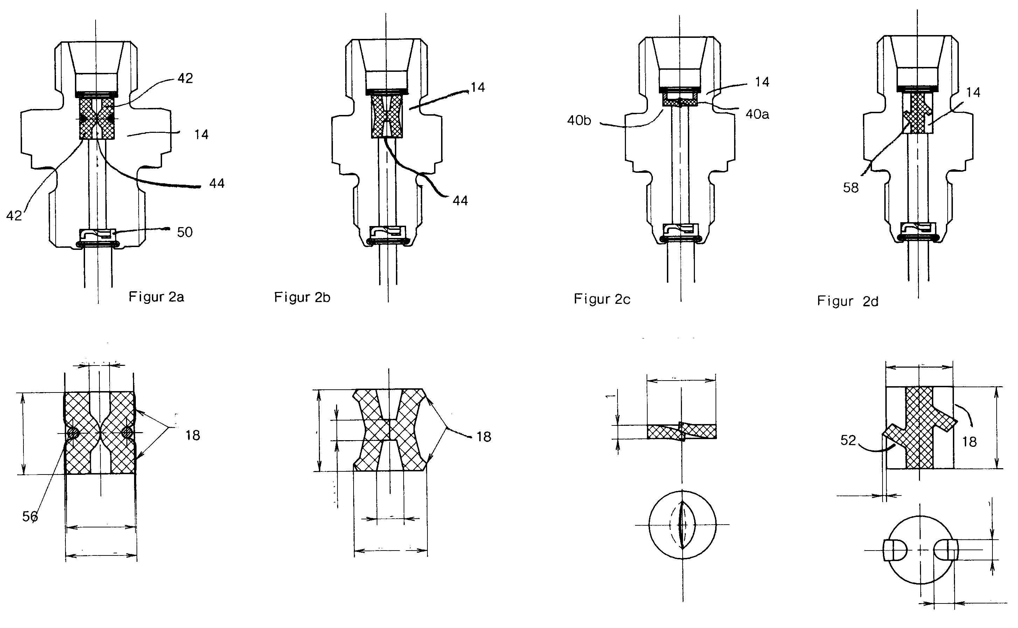

Die Fig. 2 zeigt verschiedene Ausführungsformen des Nachsaugesperrventils mit elastischen Membranen. In Fig. 2A besteht der Ventilmechanismus 10 aus einer Einzelmembran 42, die an den seitlichen dichtenden Führungsflächen 18 anliegt. Die Membran wird durch einen Sprengring 56 etwa in ihrer Mitte so gegeneinander gedrückt, daß ein zentraler Durchflußkanal 44 entsteht, der ohne Beaufschlagung durch Fluiddruck geschlossen bleibt. In Abhängigkeit von der Elastizität des Membranmaterials wird durch zunehmenden Fluiddruck das Membranventil jeweils in der Fließrichtung aufgedrückt. Auch dieser Ventilmechanismus enthält die gleiche Drossel 50 wie der Ventilmechanismus 10.

Figur 2B zeigt eine entsprechende Ausführungsform ohne Sprengring, in der der zentrale Durchflußkanal 44 lediglich durch die Elastizität des Membranmaterials verschlossen wird.

Figur 2C zeigt eine andere Ausführungsform mit zwei sich überlappenden Membranteilen 40a und 40b, die wie bei der Ausführungsform der Fig. 2B durch ihre Eigenelastizität aufeinandergedrückt werden und sich gegen einen der Elastizität des Materials entsprechenden Fluiddruck in Fließrichtung öffnen.

Figur 2D zeigt einen Ventilmechanismus 10, der eine einzige in axialer Richtung zentrale Membran 58 enthält, die in radialer Richtung Dichtungen 52 aufweist, die in Schrägstellung gegen die Dichtflächen 18 des Gehäuses 30 drücken und aufgrund ihrer Schrägstellung jeweils nur in einer Fließrichtung mit dem Fluiddruck öffnen.

Alle Ausführungsformen der Figuren 2B bis 2D enthalten die gleiche Drossel 50 wie der Ventilmechanismus 10 gemäß Fig. 1.

## Patentansprüche

1. Nachsaugesperrventil für hydraulische Kippvorrichtungen, beispielsweise für Fahrerhäuser von Lastkraftwagen, mit einem Ventilmechanismus, der als zwei in entgegengesetze Richtungen antiparallel geschaltete Rückschlagventile mit in beiden Richtungen sperrender neutraler Schließstellung wirkend ausgebildet ist,
**dadurch gekennzeichnet**, daß
der Ventilmechanismus (10) ein Schieberventil (12) oder ein Membranventil (14) aufweist.

2. Nachsaugesperrventil nach Anspruch 1, dadurch gekennzeichnet, daß das Schieberventil (12) einen in einem Gehäuse (30) verschiebbaren Schieber (16) aufweist, daß dieser mit einem Umfangsbereich seiner Umfangsflächen an dichtenden Führungsflächen (18) des Gehäuses (30) geführt sind, daß diese einen Teil der Umfangsfläche (20) des Schiebers (16) unter Bildung zweier voneinander getrennter und von den Gehäuse (30) und dem Schieber (16) begrenzte Kammern (22, 24), abdichten, daß zwei Kanäle (26, 28) im Schieber (16) vorgesehen sind, deren freie Enden (32, 34) in unterschiedlichen Kammern (22, 24) münden, und deren andere Enden (36, 38) in dem Umfangsbereich des Schiebers (16) münden,und daß der Schieber (16) mit seinen anderen Enden (36, 38) in der neutralen Schließstellung (Z) mit seinem Umfangsbereich im Bereich der dichtenden Führungsflächen (18) und in von der neutralen Schließstellung in Bereiche außerhalb der dichtenden Führungsfläche (18) verschobenen Stellung im Bereich einer der beiden Kammern (22, 24) liegt.

3. Nachsaugesperrventil nach Anspruch 1 oder 2, dadurch gekennzeichnet, daß der Schieber (16) in beiden Bewegungsrichtungen mit unterschiedlich großen Kräften je einer Feder beaufschlagt ist.

4. Nachsaugesperrventil nach Anspruch 1, dadurch gekennzeichnet, daß der Ventilmechanismus (10) elastische, in der einen Fließrichtung elastisch sich öffnende und in der anderen Richtung sperrende Membranen enthält.

5. Nachsaugesperrventil nach Anspruch 1 oder 4, dadurch gekennzeichnet, daß der Ventilmechanismus (10) eine Einzelmembran (42) enthält, die sich axial mittig elastisch zu einem zentralen Durchflußkanal (44) öffnet.

6. Nachsaugesperrventil nach Anspruch 1 oder 4, dadurch gekennzeichnet, daß der Ventilmechanismus (10) eine in axialer Richtung zentrale Membran (58) enthält, die in radialer Richtung Dichtungen (52) aufweist, die jeweils in entgegengesetzten Fließrichtungen öffnen bzw. sperren.
